# FASCICULE DE BREVET EUROPEEN

(11) **EP 2 519 797 B1**
(45) Date de publication et mention de la délivrance du brevet: **26.11.2014**
(21) Numéro de dépôt: 10814676.2
(22) Date de dépôt: 27.12.2010
(51) Int. Cl.: F26B 23/02, F26B 23/10

(54) **PROCEDE ET INSTALLATION DE SECHAGE DE MATIERES PÂTEUSES, EN PARTICULIER DE BOUES DE STATIONS D'EPURATION, AVEC GENERATION D'ENERGIE THERMIQUE**
VERFAHREN UND ANLAGE ZUR TROCKNUNG VON PASTÖSEN MATERIALIEN, IM BESONDEREN SCHLAMM AUS KLÄRANLAGEN, UND ERZEUGUNG VON WÄRMEENERGIE
METHOD AND FACILITY FOR DRYING PASTY MATERIALS, IN PARTICULAR SLUDGE FROM WASTEWATER TREATMENT PLANTS AND GENERATION OF THERMAL ENERGY

(30) Priorité: 30.12.2009 FR 0906413
(43) Date de publication de la demande: 07.11.2012
(73) Titulaire: Degrémont, 92040 Paris La Défense (FR)
(72) Inventeur: KNOER, Peter, CH-8280 Kreuzlingen (CH); STANLEY, Bruce, CH-8606 Greifensee (CH)
(74) Mandataire: Michardière, Bernard
(86) Numéro de dépôt international: PCT/IB2010/056077
(87) Numéro de publication internationale: WO 2011/080689

(56) Documents cités:
- EP-A1- 0 889 014
- EP-A2- 0 716 264
- DE-B3-102004 051 975
- US-A- 5 069 801
- US-A1- 2004 182 953

## Description

La présente invention concerne un procédé de séchage de matières pâteuses, en particulier de boues de provenant de stations d'épuration d'eaux résiduaires, dont le rendement énergétique et thermique est amélioré.

La technique du séchage thermique des boues provenant des stations d'eaux résiduaires urbaines est connue. Il existe différentes technologies permettant d'obtenir un produit fini dont la siccité finale est égale ou supérieure à 85%. La siccité d'une boue peut être définie comme le rapport de la masse de matières sèches (MS) à la masse totale de la boue (MS + eau) soit : MS/ (MS + H₂O).

Le principal reproche au séchage thermique est celui de la forte dépense énergétique nécessaire au séchage, ce qui entraîne des coûts d'exploitation élevés. Les brevets US 2004/0182953 A1, EP 0 781 741 B1 ou EP 0 889 014 B1 divulguent un procédé de séchage de produits pâteux, en particulier de boues de stations d'épuration, visant à améliorer le rendement thermique. Selon ces brevets, le procédé de séchage de matières pâteuses comprend deux étages de séchage à savoir :
- un premier étage de séchage de type indirect à l'aide d'un fluide caloporteur, ce premier étage délivrant en sortie des boues pré-séchées et de la vapeur d'eau,
- une étape de formage des boues pré-séchées à la sortie du premier étage,
- et un deuxième étage de séchage des boues pré-séchées qui sont chauffées à l'aide d'un gaz de chauffage, en particulier de l'air, ce deuxième étage donnant en sortie des boues séchées.

L'invention a pour but, surtout, de fournir un procédé qui permet de réduire l'énergie nécessaire au séchage des boues.

Selon l'invention, le procédé de séchage de matières pâteuses, en particulier de boues de stations d'épuration, comprend deux étages de séchage, à savoir :
- un premier étage de séchage de type indirect alimenté en un fluide caloporteur, qui délivre en sortie des boues pré-séchées et de la vapeur d'eau;
- une étape de formage des boues à la sortie du premier étage,
- et un deuxième étage de séchage des boues pré-séchées qui sont chauffées à l'aide d'un gaz de chauffage, notamment de l'air, ce deuxième étage donnant en sortie des boues séchées,
   et est caractérisé en ce que :
- les boues pré-séchées sortant du premier étage de séchage sont introduites dans un extrudeur de boues propre à former des cordons de boues, ou similaires, qui tombent dans un deuxième sécheur,
- les boues séchées sortant du deuxième étage de séchage sont soumises à une action mécanique pour donner des granulats, et une partie au moins des granulats est incinérée pour produire de l'énergie thermique,
- et une partie au moins de cette énergie thermique est utilisée pour chauffer le fluide caloporteur du premier étage de séchage.

De préférence, la vapeur d'eau sortant du premier étage de séchage est dirigée vers un condenseur pour y réchauffer le gaz de chauffage du deuxième étage de séchage.

Avantageusement, le fluide caloporteur pour le chauffage du premier étage de séchage circule dans une boucle fermée et est chauffé par l'incinération des boues. Le fluide caloporteur peut être constitué par de l'huile ou de la vapeur d'eau.

La boucle fermée peut comporter une dérivation avec réchauffeur entre le fluide caloporteur de la boucle et le gaz de chauffage qui va entrer dans le deuxième étage de séchage.

L'énergie thermique fournie par l'incinération des boues peut être complétée par une énergie externe provenant d'une ou plusieurs sources d'énergie prises parmi le gaz, l'huile, le biogaz, la vapeur, les fumées.

Une fraction de gaz peut être extraite entre le premier étage de séchage et le deuxième étage de séchage et être dirigée vers l'entrée d'air du système de chauffage pour l'incinération.

Avantageusement, l'incinération des granulats de boues est effectuée dans un incinérateur du groupe comprenant les incinérateurs à lit fluidisé, les incinérateurs cyclone, les incinérateurs à grilles mobiles, les incinérateurs à grilles fixes, les incinérateurs à grilles étagées, les incinérateurs rotatifs, ou autres similaire.

On peut récupérer de la chaleur additionnelle dans les fumées provenant de l'incinération.

L'invention concerne également une installation de séchage de matières pâteuses, en particulier de boues de station d'épuration, pour la mise en oeuvre du procédé défini précédemment, installation qui comprend :
- une première unité de pré-séchage de type indirect à l'aide d'un fluide caloporteur, cette unité délivrant en sortie des boues pré-séchées et de la vapeur d'eau qui est dirigée vers un condenseur pour y réchauffer un gaz de chauffage ;
- un dispositif de formage des boues à la sortie de la première unité de séchage,
- et une deuxième unité de séchage des boues pré-séchées assurant un chauffage à l'aide d'un gaz de chauffage, notamment de l'air,
   et qui est caractérisée en ce qu'elle comporte :
- une unité d'incinération d'une partie au moins des boues sortant de la deuxième unité de séchage pour produire de l'énergie thermique,
- et des moyens d'échange thermique pour transférer au moins une partie de cette énergie thermique produite au fluide caloporteur du premier étage de séchage.

De préférence, l'installation comporte, à la sortie de la deuxième unité de séchage, un réducteur pour exercer une action mécanique sur les boues séchées et les produire sous forme de granulats plus fins.

Les moyens d'échange thermique comprennent avantageusement une boucle fermée qui comporte une dérivation avec réchauffeur entre le fluide caloporteur de la boucle et le gaz de chauffage qui va entrer dans le deuxième étage de séchage.

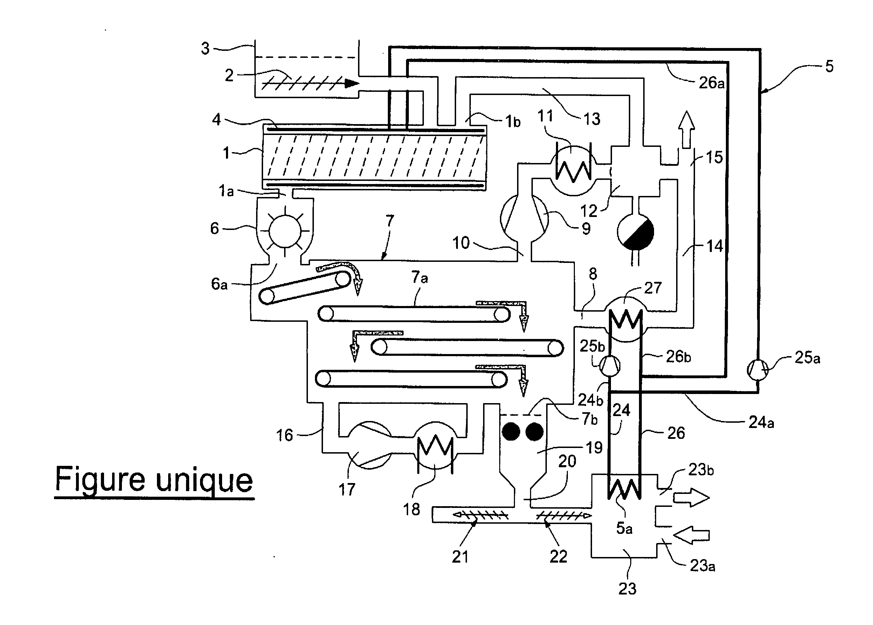

L'invention consiste, mises à part les dispositions exposées ci-dessus, en un certain nombre d'autres dispositions dont il sera plus explicitement question ci-après à propos d'un exemple de réalisation décrit avec référence au dessin annexé, mais qu'il n'est nullement limitatif.

La figure unique de ce dessin est un schéma d'une installation de séchage mettant en oeuvre le procédé de l'invention.

En se reportant au dessin, on peut voir une installation pour le séchage de matières pâteuses, en particulier de boues de station d'épuration, qui comporte un premier sécheur 1, ou unité de pré-séchage, de type indirect. L'alimentation en boues du sécheur 1 est assurée par une pompe 2, à partir d'un silo 3 contenant des boues à sécher. Le fluide caloporteur circule dans des canalisations 4 reliées à une boucle 5 qui sera décrite plus loin. Le fluide caloporteur de la boucle 5 est de préférence constitué par de l'huile ou de la vapeur d'eau.

Par sécheur de type indirect on désigne un appareil dans lequel un fluide caloporteur utilisé pour le séchage des boues circule dans des canalisations avec échange de chaleur entre le fluide caloporteur et les boues à sécher, sans être en contact direct avec ces boues. Le sécheur 1 peut être du type à couche mince, à disques ou à palettes.

Le sécheur 1 délivre à une sortie 1 a des boues pré-séchées et, à une autre sortie 1 b, de la vapeur d'eau. Les boues pré-séchées sont introduites dans un extrudeur 6 de boues propre à former des cordons de boues, ou similaires, qui tombent, à travers la sortie 6a de l'extrudeur, dans un deuxième sécheur 7, par exemple du type à bandes 7a comme illustré sur le dessin. Le sécheur 7 est du type direct c'est-à-dire que les boues circulant sur les bandes 7a sont en contact direct avec un gaz de chauffage, en particulier de l'air chaud, introduit par une entrée 8.

La boue sortant du sécheur 1, qui est encore dans la phase plastique, est extrudée à travers une plaque perforée comportant des trous de diamètre sélectionnés (extrudeurs de boue) afin de produire des éléments d'une taille uniforme et prédéterminée.

Le gaz du sécheur 7 est extrait à l'aide d'un ventilateur 9 par une sortie 10 pour traverser, le cas échéant, une unité de refroidissement 11, puis un condenseur 12. Le gaz y est réchauffé par condensation de la vapeur d'eau qui sort du premier sécheur 1 par l'orifice 1 b et qui est dirigée par la conduite 13 jusqu'au condenseur 12. A la sortie du condenseur 12 le gaz réchauffé est renvoyé, au moins en partie, par une conduite 14 vers l'entrée 8. Eventuellement, une autre partie du gaz est évacuée à l'échappement par une sortie 15. La chaleur latente de vaporisation de l'eau est récupérée dans le condenseur 12.

On peut prévoir une dérivation 16, équipée d'un ventilateur 17 pour prélever du gaz dans le sécheur 7 et le réintroduire dans ce sécheur après lui avoir fait traverser une unité de refroidissement 18.

Le sécheur 7 comporte, en sortie 7b des boues séchées, un réducteur 19, ou broyeur, propre à exercer une action mécanique sur les boues séchées pour les délivrer, en sortie 20, sous forme de granulats, de taille plus petite qu'en sortie du premier sécheur 1. La siccité des boues séchées sortant du sécheur 7 peut atteindre 95%.

Les granulats sortant du réducteur 19 sont, pour partie, évacués par un dispositif d'alimentation 21, notamment à vis, vers un silo de stockage et, pour une autre partie, par un dispositif d'alimentation 22, notamment à vis, vers un incinérateur 23, constituant une unité de chauffage, avec une entrée d'air 23a et une sortie de fumées 23b.

La boucle 5 du fluide caloporteur du premier étage de séchage 1 comporte un échangeur 5a situé dans l'incinérateur 23, qui permet de chauffer le fluide caloporteur à partir de l'énergie thermique produite par l'incinération des granulats de boues séchées.

La branche 24 de sortie de l'échangeur 5a, pour le fluide caloporteur réchauffé, se divise en deux branches 24a, 24b, chacune équipée d'une pompe 25a,25b lorsque le fluide est constitué par de l'huile, ou d'un autre moyen de régulation lorsque le fluide est constitué par de la vapeur d'eau.

La branche 24a conduit le fluide caloporteur réchauffé vers les canalisations 4 du sécheur 1. Le retour du fluide caloporteur vers l'incinérateur 23 est assuré par une canalisation 26a qui rejoint une branche de retour 26 de l'échangeur 5a.

La branche 24b dirige le fluide caloporteur vers un réchauffeur 27, assurant un chauffage du gaz, qui va entrer dans le deuxième sécheur 7, par le fluide caloporteur qui revient, par une canalisation 26b, vers la branche 26.

L'énergie thermique fournie au fluide caloporteur de la boucle 5 par l'incinération des granulats peut être complétée par une énergie externe provenant d'une ou plusieurs sources d'énergie prises par exemple, parmi du gaz, de l'huile, du biogaz, de la vapeur d'eau, des fumées...

La génération d'énergie assurée par l'incinération des boues séchées et son utilisation directe dans l'installation, au niveau du premier sécheur 1 avec récupération de la chaleur latente de vaporisation permet de réduire les besoins d'énergie externe et d'améliorer sensiblement le rendement thermique du procédé de séchage des boues.

Le granulat séché produit à partir des boues d'épuration présente une valeur calorifique élevée qui dépend du rapport de la matière organique à la quantité totale de solide sec, des propriétés de la boue elle-même et de la teneur en humidité. Cette caractéristique fait que la boue séchée constitue une source viable d'énergie thermique pour le procédé susmentionné.

L'alimentation en boue peut être manuelle ou automatique. La quantité incinérée dépend des exigences et peut être complétée avec des sources externes d'énergie tels que, mais non limités à : gaz, huile, biogaz, combustible solide, etc... Toute boue traitée qui n'est pas exigée par le système de chauffage est évacuée de toute manière prescrite.

Les gaz d'échappement quittant l'installation entre la première unité de pré-séchage et la deuxième unité de séchage, ou provenant de toute partie de l'installation, peuvent être dirigés vers l'entrée d'air 23a du système de chauffage 23 où ils sont mélangés avec le courant d'air principal pour le système de chauffage. Cette disposition permettra d'augmenter la température de l'air en entrée et de désodoriser le flux de gaz d'échappement.

Le système de chauffage constitué par l'incinérateur 23 peut être mis en oeuvre avec ou sans système de traitement des gaz de fumées.

Le système de chauffage peut incorporer un équipement de récupération de chaleur additionnelle provenant des fumées.

La chaleur générée par l'incinération des granulats peut être utilisée pour élever la température de tout moyen choisi tel que, mais sans limitation : huile et air, ou pour générer de la vapeur, pour chauffer l'équipement de l'installation.

Les équipements de l'installation peuvent être prévus dans un environnement Atex , ou dans un environnement Non-Atex.

La commande du procédé peut être automatique ou manuelle ou une combinaison des deux. Le procédé peut être continu ou non continu, ou une combinaison des deux.

Le procédé de l'invention peut être appliqué à un procédé et/ou à une installation selon EP 0 781 741 ou EP 0 889 014.

Le procédé de l'invention peut être appliqué à des méthodes de séchage et à des installations autres que celles décrites selon EP 0 781 741 ou EP 0889014.

## Revendications

1. Procédé de séchage de matières pâteuses, en particulier de boues de stations d'épuration, comprenant deux étages de séchage, à savoir :
- un premier étage de séchage (1) de type indirect alimenté en un fluide caloporteur, qui délivre en sortie (1 a, 1 b) des boues pré-séchées et de la vapeur d'eau;
- une étape (6) de formage des boues à la sortie du premier étage,
- et un deuxième étage de séchage (7) des boues pré-séchées qui sont chauffées à l'aide d'un gaz de chauffage, notamment de l'air, ce deuxième étage donnant en sortie (7b) des boues séchées,
**caractérisé en ce que** :
- les boues pré-séchées sortant du premier étage de séchage (1) sont introduites dans un extrudeur (6) de boues propre à former des cordons de boues, ou similaires, qui tombent dans un deuxième sécheur (7),
- les boues séchées sortant du deuxième étage de séchage sont soumises à une action mécanique (19) pour donner des granulats, et une partie au moins des granulats est incinérée (23) pour produire de l'énergie thermique,
- et une partie au moins de cette énergie thermique est utilisée pour chauffer le fluide caloporteur du premier étage de séchage.

2. Procédé selon la revendication 1, **caractérisé en ce que** la vapeur d'eau sortant (1 b) du premier étage de séchage est dirigée vers un condenseur (12) pour y réchauffer le gaz de chauffage du deuxième étage de séchage (7).

3. Procédé selon l'une quelconque des revendications précédentes, **caractérisé en ce que** le fluide caloporteur pour le chauffage du premier étage de séchage (1) circule dans une boucle fermée (5) et est chauffé par l'incinération des boues.

4. Procédé selon l'une quelconque des revendications précédentes, **caractérisé en ce que** le fluide caloporteur est constitué par de l'huile ou de la vapeur d'eau.

5. Procédé selon la revendication 3, **caractérisé en ce que** la boucle fermée (5) comporte une dérivation (24a, 24b) avec réchauffeur (27) entre le fluide caloporteur de la boucle (5) et le gaz de chauffage qui va entrer dans le deuxième étage de séchage (7).

6. Procédé selon l'une quelconque des revendications précédentes, **caractérisé en ce que** l'énergie thermique fournie par l'incinération des boues est complétée par une énergie externe provenant d'une ou plusieurs sources d'énergie prises parmi le gaz, l'huile, le biogaz, la vapeur, les fumées.

7. Procédé selon l'une quelconque des revendications précédentes, **caractérisé en ce qu'**une fraction de gaz est extraite entre le premier étage de séchage et le deuxième étage de séchage et est dirigée vers l'entrée d'air (23a) du système de chauffage pour l'incinération.

8. Procédé selon l'une quelconque des revendications précédentes, **caractérisé en ce que** l'incinération des boues est effectuée dans un incinérateur du groupe comprenant les incinérateurs à lit fluidisé, les incinérateurs cyclone, les incinérateurs à grilles mobiles, les incinérateurs à grilles fixes, les incinérateurs à grilles étagées, les incinérateurs rotatifs.

9. Procédé selon l'une quelconque des revendications précédentes, **caractérisé en ce que** l'on récupère de la chaleur additionnelle dans les fumées provenant de l'incinération.

10. Installation de séchage de matières pâteuses, en particulier de boues de station d'épuration, pour la mise en oeuvre d'un procédé selon l'une quelconque des revendications précédentes, comprenant :
- une première unité de pré-séchage (1) de type indirect à l'aide d'un fluide caloporteur, cette unité délivrant en sortie (1a, 1b) des boues pré-séchées et de la vapeur d'eau qui est dirigée vers un condenseur (12) pour y réchauffer un gaz de chauffage ;
- un dispositif (6) de formage des boues à la sortie de la première unité de séchage (1),
- et une deuxième unité de séchage (7) des boues pré-séchées assurant un chauffage à l'aide d'un gaz de chauffage, notamment de l'air,
**caractérisée en ce qu'**elle comporte :
- - à la sortie de la première unité de pré-séchage (1) un extrudeur (6) des boues pré-séchées propre à former des cordons de boues, ou similaires, qui tombent dans un deuxième sécheur (7),
- à la sortie (7b) de la deuxième unité de séchage, un réducteur (19) pour exercer une action mécanique sur les boues séchées et les produire sous forme de granulats,
- une unité d'incinération (23) d'une partie au moins des granulats sortant de la deuxième unité de séchage pour produire de l'énergie thermique,
- et des moyens d'échange thermique (5,5a) pour transférer au moins une partie de cette énergie thermique produite au fluide caloporteur du premier étage de séchage (1).

11. Installation selon la revendication 10, **caractérisée en ce que** les moyens d'échange thermique comprennent une boucle fermée (5) qui comporte une dérivation (24b, 26b) avec réchauffeur (27) entre le fluide caloporteur de la boucle et le gaz de chauffage qui va entrer dans le deuxième étage de séchage (7).

## Patentansprüche

1. Verfahren zum Trocknen pastöser Materialien, insbesondere von Schlämmen aus Kläranlagen, mit zwei Trocknungsstufen, nämlich:
- einer mit einem Wärmeträgerfluid gespeisten ersten Trocknungsstufe (1) vom indirekten Typ, die am Ausgang (1a, 1b) vorgetrocknete Schlämme und Wasserdampf ausgibt;
- einem Schritt (6) des Formens der Schlämme am Ausgang der ersten Stufe;
- einer zweiten Stufe (7) zum Trocknen der vorgetrockneten Schlämme, welche mittels eines Heizgases, insbesondere Luft, erwärmt werden, wobei die zweite Stufe am Auslass (7b) trockene Schlämme liefert,
**dadurch gekennzeichnet, dass**:
- die aus der ersten Trocknungsstufe (1) austretenden vorgetrockneten Schlämme in einen Schlammextruder (6) eingebracht werden, der geeignet ist, Schlammbänder oder dergleichen zu formen, welche in einen zweiten Trockner (7) fallen,
- die aus der zweiten Trocknungsstufe austretenden getrockneten Schlämme einer mechanischen Aktion (19) unterzogen werden, um Granulat zu ergeben, und zumindest ein Teil des Granulats verbrannt (23) wird, um thermische Energie zu erzeugen,
- und zumindest ein Teil dieser thermischen Energie zum Erwärmen des Wärmeträgerfluids der ersten Trocknungsstufe verwendet wird.

2. Verfahren nach Anspruch 1, **dadurch gekennzeichnet, dass** der aus der ersten Trocknungsstufe austretende Wasserdampf (1b) zu einem Kondensator (12) geleitet wird, um dort das Heizgas der zweiten Trocknungsstufe (7) wieder zu erwärmen.

3. Verfahren nach einem der vorhergehenden Ansprüche, **dadurch gekennzeichnet, dass** das Wärmeträgerfluid zum Erwärmen der ersten Trocknungsstufe (1) in einem geschlossenen Kreislauf (5) umläuft und durch das Verbrennen der Schlämme erwärmt wird.

4. Verfahren nach einem der vorhergehenden Ansprüche, **dadurch gekennzeichnet, dass** das Wärmeträgerfluid durch Öl oder Wasserdampf gebildet ist.

5. Verfahren nach Anspruch 3, **dadurch gekennzeichnet, dass** der geschlossene Kreislauf (5) einen Abzweig (24a, 24b) mit einer Heizeinrichtung (27) zwischen dem Wärmeträgerfluid des Kreislaufs (5) und dem Heizgas aufweist, das in die zweite Trocknungsstufe (7) eintritt.

6. Verfahren nach einem der vorhergehenden Ansprüche, **dadurch gekennzeichnet, dass** die durch die Verbrennung der Schlämme gelieferte thermische Energie durch eine externe Energie vervollständigt wird, welche von einer oder mehreren Energiequellen, ausgewählt aus Gas, Öl, Biogas, Dampf, Rauch, stammt.

7. Verfahren nach einem der vorhergehenden Ansprüche, **dadurch gekennzeichnet, dass** ein Teil des Gases zwischen der ersten Trocknungsstufe und der zweiten Trocknungsstufe abgezogen wird und für die Verbrennung in Richtung des Lufteinlasses (23a) des Heizsystems geleitet wird.

8. Verfahren nach einem der vorhergehenden Ansprüche, **dadurch gekennzeichnet, dass** die Verbrennung der Schlämme in einer Verbrennungseinrichtung aus der Gruppe erfolgt, welche Wirbelschichtverbrennungseinrichtungen, Zyklon-Verbrennungseinrichtungen, Verbrennungseinrichtungen mit Vorschubrosten, Verbrennungseinrichtungen mit Stufenrosten, Rotationsverbrennungseinrichtungen aufweist.

9. Verfahren nach einem der vorhergehenden Ansprüche, **dadurch gekennzeichnet, dass** zusätzliche Wärme aus dem Rauch der Verbrennung gewonnen wird.

10. Anlage zum Trocknen von pastösen Materialien, insbesondere von Schlämmen aus Kläranlagen, zur Durchführung eines Verfahrens nach einem der vorhergehenden Ansprüche, mit:
- einer ersten Einheit zum Vortrocknen (1) vom indirekten Typ unter Verwendung eines Wärmeträgerfluids, wobei die Einheit an ihrem Ausgang (1a, 1b) vorgetrocknete Schlämme und Wasserdampf ausgibt, welcher zu einem Kondensator (12) geleitet wird, um dort ein Heizgas zu erwärmen;
- einer Vorrichtung (6) zum Formen der Schlämme am Ausgang der erste Trocknungseinheit (1);
- und einer zweiten Einheit zum Trocknen (7) von vorgetrockneten Schlämmen, die eine Erwärmung mittels eines Heizgases, insbesondere Luft, gewährleistet,
**dadurch gekennzeichnet, dass** sie aufweist:
- am Ausgang der ersten Vortrocknungseinheit (1), einen Extruder (6) für vorgetrocknete Schlämme, der zur Bildung von Schlammbändern oder dergleichen geeignet ist, welche in einen zweiten Trockner (7) fallen,
- am Ausgang (7b) der zweiten Trocknungseinheit, eine Reduziereinrichtung (19) zur Durchführung einer mechanischen Aktion an den getrockneten Schlämmen und um diese zu Granulat verarbeiten,
- eine Einheit (23) zum Verbrennen mindestens eines Teiles des aus der zweiten Trocknungseinheit austretenden Granulats, um thermische Energie zu erzeugen,
- und Wärmetauschereinrichtungen (5, 5a) zum Übertragen wenigstens eines Teils dieser erzeugten thermischen Energie an das Wärmeträgerfluid der ersten Trocknungsstufe (1).

11. Vorrichtung nach Anspruch 10, **dadurch gekennzeichnet, dass** die Wärmetauschereinrichtungen einen geschlossenen Kreislauf (5) aufweisen, der einen Abzweig (24a, 24b) mit einer Heizeinrichtung (27) zwischen dem Wärmeträgerfluid des Kreislaufs und dem Heizgas aufweist, das in die zweite Trocknungsstufe (7) eintritt.

## Claims

1. Method for drying pasty materials, in particular wastewater treatment plant sludge, comprising two drying stages, that is:
- a first indirect drying stage (1) fed with a heat transfer fluid, which delivers predried sludge and water vapour at the outlet (1 a, 1 b);
- a sludge-forming step (6) at the outlet of the first stage,
- and a second drying stage (7) for the predried sludge, which is heated using a heating gas, in particular air, this second stage producing dried sludge at the outlet (7b);
**characterized in that**:
- the predried sludge exiting the first drying stage (1) is introduced into a sludge extruder (6) able to form bands of sludge, or the like, which fall into a second dryer (7),
- the dried sludge leaving the second drying stage is subjected to mechanical action (19) to produce aggregates and at least part of the aggregates is incinerated (23) to produce heat energy;
- and at least part of this heat energy is used to heat the heat transfer fluid of the first drying stage.

2. Method according to Claim 1, **characterized in that** the water vapour leaving (1 b) the first drying stage is sent to a condenser (12) to heat therein the heating gas of the second drying stage (7).

3. Method according to either of the preceding claims, **characterized in that** the heat transfer fluid for the heating of the first drying stage (1) flows in a closed loop (5) and is heated by the incineration of the sludge.

4. Method according to any one of the preceding claims, **characterized in that** the heat transfer fluid consists of oil or water vapour.

5. Method according to Claim 3, **characterized in that** the closed loop (5) comprises a bypass (24a, 24b) with heater (27) between the heat transfer fluid of the loop (5) and the heating gas which enters the second drying stage (7).

6. Method according to any one of the preceding claims, **characterized in that** the heat energy supplied by the incineration of the sludge is supplemented by an external energy from one or more energy sources selected from gas, oil, biogas, steam, flue gases.

7. Method according to any one of the preceding claims, **characterized in that** a fraction of gas is extracted between the first drying stage and the second drying stage and is sent to the air inlet (23a) of the heating system for incineration.

8. Method according to any one of the preceding claims, **characterized in that** the incineration of the sludge is carried out in an incinerator of the group comprising fluidized bed incinerators, cyclone incinerators, mobile grid incinerators, fixed grid incinerators, multistage grid incinerators, rotary incinerators.

9. Method according to any one of the preceding claims, **characterized in that** additional heat is recovered from the flue gases produced by the incineration.

10. Installation for drying pasty materials, in particular wastewater treatment plant sludge, for implementing a method according to any one of the preceding claims, comprising:
- a first indirect predrying unit (1) for predrying with the aid of a heat transfer fluid, which unit delivers at the outlet (1a, 1b) predried sludge and water vapour which is sent to a condenser (12) to heat therein a heating gas;
- a sludge-forming device (6) at the outlet of the first drying unit (1);
- and a second drying unit (7) for drying the predried sludge, which is heated using a heating gas, in particular air;
**characterized in that** it comprises:
- at the outlet of the first predrying unit (1) an extruder (6) of the predried sludge which is able to form bands of sludge, or the like, which fall into a second dryer (7),
- at the outlet (7b) of the second drying unit, a reducer (19) to exert mechanical action on the dried sludge and produce it in the form of aggregates;
- and a unit (23) for incinerating at least part of the aggregates leaving the second drying unit to produce heat energy;
- and heat exchange means (5, 5a) for transferring at least part of this heat energy produced to the heat transfer fluid of the first drying stage (1).

11. Installation according to Claim 10, **characterized in that** the heat exchange means comprise a closed loop (5) which comprises a bypass (24b, 26b) with heater (27) between the heat transfer fluid of the loop and the heating gas which enters the second drying stage (7).
